# EUROPÄISCHE PATENTANMELDUNG

(11) **EP 1 724 553 A2**
(43) Veröffentlichungstag der Anmeldung: **22.11.2006**
(21) Anmeldenummer: 06010043.5
(22) Anmeldetag: 16.05.2006
(51) Int. Cl.: G01C 21/20

(54) **Kombiniertes Navigations- und Kommunikationsgerät**

(30) Priorität: 17.05.2005 DE 102005023374; 17.05.2005 DE 102005023373
(71) Anmelder: Bury Sp.z.o.o, 39 300 Mielec (PL)
(72) Erfinder: Piekarz, Roman, 39-300 Mielec (PL)
(74) Vertreter: Gerstein, Hans Joachim

(57) **Zusammenfassung**

Ein kombiniertes Navigations- und Kommunikationsgerät (1) mit in das Gerät (1) integriertem Mobiltelefonmodul (2) mit Telefon-Freisprechfunktion, mit einer Navigationseinheit (3) zur Routenführung und mit einer von dem Mobiltelefonmodul (2) und der Navigationseinheit (3) gemeinsam angesteuerten Anzeigeeinheit (5) ist so ausgebildet, dass das Mobiltelefonmodul (2) zum Empfang von nutzerspezifischen Daten von einem externen Mobiltelefon (20) und anschließender Bereitstellung einer nutzerspezifischen Mobiltelefonfunktion durch das kombinierte Navigations- und Kommunikationsgerät (1) dient.

## Beschreibung

Die Erfindung betrifft ein kombiniertes Navigations- und Kommunikationsgerät mit in das Gerät integriertem Mobiltelefonmodul mit Telefon-Freisprechfunktion, mit einer Navigationseinheit zur Routenführung und mit einer von dem Mobiltelefonmodul und der Navigationseinheit gemeinsam angesteuerten Anzeigeeinheit.

Separate Telefon-Freisprechanlagen für ein Mobiltelefon sind zum Einbau in Kraftfahrzeuge hinreichend bekannt. Diese Telefon-Freisprechanlagen haben in der Regel einen Halter zur Aufnahme eines Mobiltelefons, das zur drahtlosen Kommunikation in einem Mobiltelefonnetz eingerichtet ist. Der Halter ist mit einer Steuerungsanordnung zur Steuerung wenigstens einer Freisprechfunktion für das Mobiltelefon verbunden.

Weiterhin sind Navigationsgeräte bekannt, die ebenfalls in ein Kraftfahrzeug eingebaut werden können und zur Routenführung dienen. Die Navigationsberechnung kann entweder On-Board durch das Navigationsgerät selbst oder Off-Board in einer Zentrale erfolgen.

Weiterhin ist bekannt, die Freisprechanlage für das Mobiltelefon mit dem Navigationsgerät derart zu koppeln, dass diese eine Anzeigeeinheit und Bedieneinheit gemeinsam nutzen. Bei diesen gekoppelten Geräten ist jedoch immer noch ein separates Mobiltelefon vorgesehen, das in einen Halter eingesteckt und mit einer Freisprechanlage verbunden ist.

Die herkömmlichen Anlagen erfordern nachteilig immer das Einstecken eines Mobiltelefons in einen Halter um mindestens die im Kraftfahrzeug eingebaute Antenne zu kontaktieren oder die Installation von mindestens zwei unterschiedlichen Geräten im Kraftfahrzeug.

Aufgabe der Erfindung ist es daher, ein verbessertes kombiniertes Navigations- und Kommunikationsgerät zu schaffen, das einen geringen Installationsaufwand im Fahrzeug und eine einfache Benutzung ermöglicht.

Die Aufgabe wird mit dem kombinierten Navigations- und Kommunikationsgerät der eingangs genannten Art dadurch gelöst, dass das Mobiltelefonmodul zum Empfang der nutzerspezifischen Daten von einem externen Mobiltelefon und anschließenden Bereitstellung einer nutzerspezifischen Mobiltelefon-Funktion durch das kombinierte Navigations- und Kommunikationsgerät ausgebildet ist.

Die Integration eines Mobiltelefons in das Navigationsgerät hat den Vorteil, dass kein separates Mobiltelefon zur Nutzung der Freisprechanlage im Fahrzeug erforderlich ist. Vielmehr werden die zur Nutzung des Mobilfunknetzes erforderlichen nutzerspezifischen Daten über eine Datenübertragungsschnittstelle durch das Mobiltelefonmodul von einem externen Mobiltelefon abgerufen, so dass das Mobiltelefonmodul anschließend die nutzerspezifische Funktionalität erhält. Für diese Datenübertragung ist seit kurzem der sogenannte rSAP-Standard verfügbar. Das die nutzerspezifischen Daten empfangende Mobiltelefon meldet sich gemäß den Vorgaben des rSAP-Standards im Mobilfunknetz an und erhält die Kontrolle über die nutzerspezifische Teilnehmernummer. Das die nutzerspezifischen Daten sendende Mobiltelefon wird hingegen weitestgehend deaktiviert.

In einer bevorzugten Ausführungsform ist das kombinierte Navigations- und Kommunikationsgerät zum Anwählen einer Navigationszentrale über ein Mobilfunk-Telefonnetz, Übersenden mindestens einer Routenberechnungsanfrage an die Navigationszentrale, Empfangen mindestens einer berechneten Routenführung von der Navigationszentrale über das Mobilfunk-Telefonnetz mit dem integrierten Mobiltelefonmodul und Anzeigen der Routenführung auf der Anzeigeeinheit ausgebildet.

Es wird somit vorgeschlagen, ein Mobiltelefonmodul mit einer Navigationseinrichtung in einem Gerät zusammen zu fassen und dabei das Mobiltelefonmodul durch Zugriff auf nutzerspezifische Daten von einem externen Mobiltelefon zu aktivieren und die Funktionalität des externen Mobiltelefons auf das Mobiltelefonmodul zu übertragen. Dann wird für die Routenplanung eine Abfrage bei einer Navigationszentrale mit Hilfe des aktivierten Mobiltelefonmoduls gestartet, so dass ohne aktuelle Navigationsdaten im kombinierten Navigations- und Kommunikationsmodul vorhalten zu müssen eine präzise Routenführung auf Basis der von der Navigationszentrale empfangenen Routendaten erfolgen kann.

Damit wird eine Navigation auf Basis aktueller Navigationsdaten ohne aufwändige Aktualisierungsprozeduren bei einfacher Benutzung sowie einem geringen Installationsaufwand im Fahrzeug ermöglicht.

Die nutzerspezifischen Daten sind vorzugsweise Zugangs-, Systemeinstellungs- und Nutzdaten, so dass in dem Mobiltelefonmodul des kombinierten Navigations- und Kommunikationsgerätes neben den Zugangsberechtigungscodes auch nutzerspezifische Telefonbucheinträge, Kurzmitteilungen, Ruflisten und eventuell auch Klingeltöne, Signalisierungseinstellungen etc. verfügbar sind. Nutzerspezifische Daten können auch Informationen über die anzuwählende Navigationszentrale zur Off-board-Navigation sein.

Das kombinierte Navigations- und Kommunikationsgerät hat vorzugsweise einen Datenspeicher für nutzerspezifische Daten. Besonders vorteilhaft ist es, wenn in dem Datenspeicher des Mobiltelefonmoduls eine Präferenzliste von externen Mobiltelefonen abgelegt ist, um den Empfang der nutzerspezifischen Daten in Abhängigkeit von der Präferenzliste zu steuern. Wenn zwei oder mehr externe Mobiltelefone versuchen, ihre Funktionalität auf das Mobiltelefonmodul zu übertragen, kann mit Hilfe der Präferenzliste durch das kombinierte Navigations- und Kommunikationsgerät ausgewählt werden, welches externe Mobiltelefon den Vorrang erhält.

Der Zugriff auf die nutzerspezifischen Daten durch das kombinierte Navigations- und Kommunikationsgerät zur Bereitstellung einer nutzerspezifischen Mobiltelefonfunktion erfolgt vorzugsweise automatisch dann, wenn ein in der Präferenzliste enthaltenes externes Mobiltelefon in die Übertragungsreichweite des kombinierten Navigations- und Kommunikationsgerätes gelangt. Somit wird automatisch beispielsweise beim Einsteigen eines Fahrers in sein Fahrzeug die Funktion seines tragbaren Mobiltelefons auf das im Fahrzeug eingebaute kombinierte Navigations- und Kommunikationsgerät übertragen, ohne dass eine Aktion durch den Fahrer erforderlich ist. Dabei ist es besonders vorteilhaft, wenn das kombinierte Navigations- und Kommunikationsgerät eine von einer Sende-/Empfangseinheit des Mobiltelefonmoduls zur Kommunikation mit dem Mobiltelefonnetz separate Funkdatenübertragungsschnittstelle, insbesondere eine Bluetooth-Schnittstelle, zum Empfang der nutzerspezifischen Daten hat. Dann erfolgt eine Datenübertragung, ohne dass eine Sichtverbindung zwischen Mobiltelefon und Datenübertragungsschnittstelle des kombinierten Navigations- und Kommunikationsgerätes erforderlich ist. Das externe Mobiltelefon kann damit in der Tasche des Nutzers bleiben.

Es ist aber auch denkbar, dass das kombinierte Navigations- und Kommunikationsgerät eine optische Datenübertragungsschnittstelle, insbesondere eine Infrarotschnittstelle, zum Empfang der nutzerspezifischen Daten hat.

Weiterhin ist es vorteilhaft, wenn in ein gemeinsames Gehäuse des Gerätes mindestens ein Lautsprecher integriert und direkt oder indirekt mit dem Mobiltelefonmodul und der Navigationseinheit verbunden ist. Damit kann die Navigations- und Freisprechanlage in einem Gehäuse realisiert werden, ohne dass zusätzliche Anschlüsse für die Audiowiedergabe erforderlich sind. Das Gehäuse kann tragbar sein, um durch einen Nutzer in unterschiedlichen Fahrzeugen, beispielsweise eigenem PKW und Mietwagen, genutzt zu werden.

Vorteilhaft ist es auch, wenn eine Interfaceeinheit für Telefonfreisprechfunktionen in das Gerät integriert und wenigstens mit dem Mobiltelefonmodul verbunden ist. Die Freisprechfunktionalität des Mobiltelefons und gegebenenfalls eine Vorrangsteuerung für die Audio- und Bildausgabe wird dann durch die in das Gerät integrierte Interfaceeinheit und nicht durch eine externe an das kombinierte Navigations- und Kommunikationsgerät anschließbare Freisprechanlage unterstützt.

Weiterhin ist es vorteilhaft, wenn das Gerät ein mit dem Navigationsmodul verbundenes und in das Gerät integriertes Satellitenortungs-Empfangsmodul zur satellitengestützten Positionsbestimmung und/oder Rundfunkempfänger mit Verkehrsdatenextraktionseinheit zur Extraktion von Verkehrsdaten aus Rundfunksignalen hat. Die Integration des Satellitenortungs-Empfangsmoduls und des Rundfunkempfängers im Gehäuse oder am Gehäusefuß des Gerätes hat den Vorteil, dass ein zusätzlicher Anschluss externer Ortungs- und/oder Verkehrsdatenmodule nicht erforderlich ist. Natürlich können solche Anschlüsse für externe Module zusätzlich oder alternativ vorgesehen sein.

Weiterhin ist es vorteilhaft, wenn in das Gerät eine Datenschnittstelle, insbesondere ein USB-Anschluss, integriert und mit den Lautsprechern und/oder einem Freisprechanlagenanschluss zur ein- oder mehrkanaligen Audiowiedergabe von über die Datenschnittstelle in das Gerät einlesbaren Audiodaten verbunden ist. Damit kann zusätzlich ein Musikabspielgerät realisiert werden. Die Datenschnittstelle kann auch zusätzlich zur Programmierung des kombinierten Navigations- und Kommunikationsgerätes oder zum Aufspielen neuer Steuerungssoftware sowie zum Einspielen von Navigationsdaten genutzt werden.

In das Gerät kann auch ein SIM-Kartenleser integriert und mit dem Mobiltelefon zum Einlesen der nutzerspezifischen Daten von einem in einer SIM-Karte integrierten Datenspeicher verbunden sein. Eine solche SIM-Karte (Subscriber-Identity-Module) wird in herkömmlichen Mobiltelefonen zur Abspeicherung der nutzerspezifischen Daten genutzt. Diese SIM-Karte wird in die tragbaren Mobiltelefone eingesteckt, so dass das Mobiltelefon die nutzerspezifischen Mobiltelefonfunktionen erhält und überhaupt betriebsbereit ist. Mit Hilfe dieses SIM-Kartenlesers kann das kombinierte Navigations- und Kommunikationsgerät auch dann genutzt werden, wenn kein rSAP-fähiges externes Mobiltelefon verfügbar ist, mit dem nutzerspezifische Daten übertragen werden können.

Die Bedienung und Steuerung des kombinierten Navigations- und Kommunikationsgerätes erfolgt vorzugsweise durch eine von dem Mobiltelefonmodul und der Navigationseinheit gemeinsam genutzte Eingabeeinheit. Diese kann beispielsweise die als Touchscreen ausgebildete Anzeigeeinheit und/oder eine Fernbedienung sein.

Besonders vorteilhaft ist es, wenn das kombinierte Navigations- und Kommunikationsgerät eine Notruftaste hat und zur automatischen Anwahl einer Notrufzentrale bei Betätigen der Notruftaste mit Hilfe des integrierten Mobiltelefonmoduls und Übersenden von aktuellen Positionsdaten an die Notrufzentrale eingerichtet ist.

In entsprechender Weise kann auch mindestens eine Informationsruftaste in das kombinierte Navigations- und Kommunikationsgerät integriert sein, um Informationen von und zu einer Zentrale mit Hilfe des integrierten Mobiltelefonmoduls zu übertragen.

Die Erfindung wird nachfolgend anhand der beigefügten Zeichnung beispielhaft näher erläutert. Es zeigt:
- Figur 1 -: Blockdiagramm eines kombinierten Navigations- und Kommunikationsgerätes;
- Figur 2 -: perspektivische Ansicht der Komponenten des kombinierten Navigations- und Kommunikationsgerätes;
- Figur 3 -: perspektivische Vorderansicht der Anzeigeeinheit für das Navigationsund Kommunikationsgerät aus Figur 2;
- Figur 4 -: perspektivische Rückansicht der Anzeigeeinheit aus Figur 3.

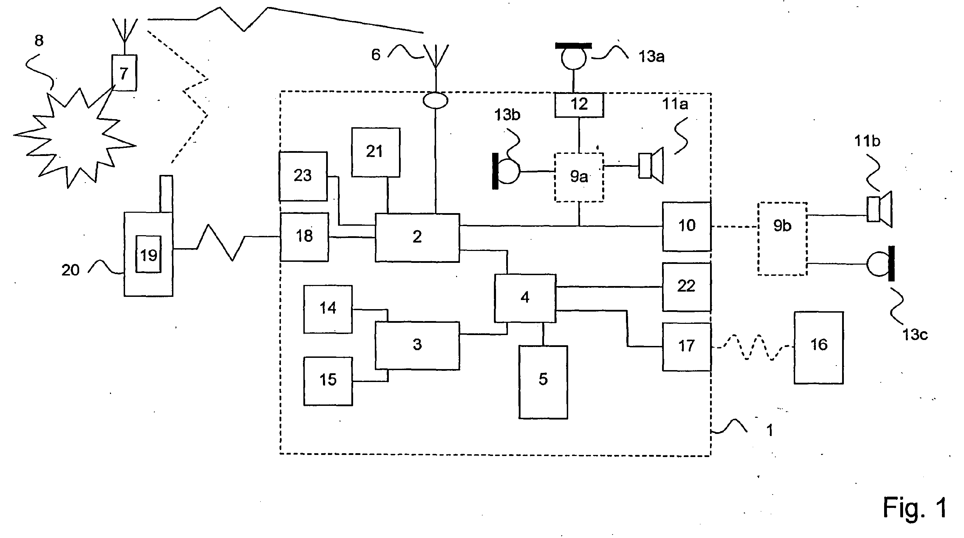

Die Figur 1 lässt ein Blockdiagramm eines kombinierten Navigations- und Kommunikationsgerätes 1 erkennen, in das ein Mobiltelefonmodul 2 und eine Navigationseinheit 3 integriert ist. Das Mobiltelefonmodul 2 und die Navigationseinheit 3 nutzen über eine gemeinsame Steuerungseinheit 4 eine gemeinsame Anzeigeeinheit 5.

Die Anzeigeeinheit 5 kann beispielsweise als Touchscreen ausgebildet sein, um das kombinierte Navigations- und Kommunikationsgerät 1 zu bedienen.

Das Mobiltelefonmodul 2 hat eine nicht dargestellte Sende-/Empfangseinheit, um über eine an das kombinierte Navigations- und Kommunikationsgerät 1 anschließbare Antenne 6 im Fahrzeug mit Basisstationen 7 eines Mobilfunktelefonnetzes 8 zu kommunizieren und Telefon-Kommunikationsverbindungen aufzubauen. Das Mobiltelefonmodul 2 ist über eine in das kombinierte Navigations- und Kommunikationsgerät 1 integrierte Interfaceeinheit 9a für Telefonfreisprechfunktionen oder über einen Anschluss 10 mit einer im Fahrzeug eingebauten externen Interfaceeinheit 9b für Telefonfreisprechfunktionen verbunden, um über in das Gerät 1 integrierte Lautsprecher 11 a und/oder im Fahrzeug eingebaute externe Lautsprecher 11 b Audiosignale z. B. in Stereo wiederzugeben.

Die interne Interfaceeinheit 9a kann über einen Anschlusskontakt 12 mit einem externen Mikrofon 13a oder direkt mit einem in das Gehäuse des Gerätes 1 integrierten Mikrofon 13b verbunden sein. In entsprechender Weise kann die externe Interfaceeinheit 9b für Telefonfreisprechfunktionen einen Anschluss an ein externes im Fahrzeug eingebautes Mikrofon 13c haben.

Die Navigationseinheit 3 ist mit einem in das Gerät 1 integrierten Satellitenortungs-Empfangsmodul 14 zur Positionsbestimmung verbunden. Weiterhin ist in das Gerät 1 ein Rundfunkempfänger 15 mit Verkehrsdatenextraktionseinheit zur Extraktion von Verkehrsdaten aus Rundfunksignalen (TMC-Empfänger:Traffic Message Channel) integriert, der mit der Navigationseinheit 3 verbunden ist. Optional können an dem Gerät 1 auch lediglich Anschlüsse für externe Satellitenortungs-Empfangsmodule und externe TMC-Empfänger vorgesehen sein. Aus den Positionsdaten des Satellitenortungs-Empfangsmoduls 14 und den Verkehrsdaten des TMC-Empfängers 15 kann die Navigationseinheit 3 direkt durch On-Board-Navigation oder indirekt vorzugsweise unter Nutzung des Mobiltelefonmoduls 2 durch Off-Board-Navigation in einer Navigationszentrale Routenempfehlungen zur Routenführung ausarbeiten, die auf der gemeinsamen Anzeigeeinheit 5 dargestellt werden.

Die Bedienung des kombinierten Navigations- und Kommunikationsgerätes erfolgt beispielsweise über eine am Lenkrad des Fahrzeugs montierbare Fernbedienung 16, die über eine Datenübertragungsschnittstelle 17 des Gerätes mit dem Mobiltelefonmodul 2 und der Navigationseinheit 3 verbunden ist. Die Datenübertragungsschnittstelle 17 kann beispielsweise eine Funkschnittstelle, zum Beispiel Bluetooth-Schnittstelle, oder eine optische Schnittstelle, zum Beispiel Infrarot-Schnittstelle sein.

Es wird eine nutzerspezifische Mobiltelefonfunktion des kombinierten Navigationsund Kommunikationsgerätes dadurch bereitgestellt, dass über eine Datenübertragungsschnittstelle 18 nutzerspezifische Daten, wie Zugangs-, Systemeinstellungsund Nutzdaten, von einer SIM-Karte 19 eines externen Mobiltelefons 20 an das Mobiltelefonmodul 2 übertragen werden. Die Funktionalität des externen Mobiltelefons 20 wird im Mobiltelefonmodul 2 dadurch bereitgestellt, dass das Mobiltelefonmodul 2 wiederholt bedarfsweise auf die im externen Mobiltelefon 20 abgelegten nuterzspezifischen Daten zugreift, so dass eine ständige Kommunikationsverbindung bestehen muss. Bei Abbruch der Kommunikationsverbindung wird die Kontrolle wieder an das externe Mobiltelefon zurückgegeben. Optional können die nutzerspezifischen Daten aber auch in einem mit dem Mobiltelefonmodul 2 verbundenen Datenspeicher 21 abgelegt werden.

In einer bevorzugten Ausführungsform wird eine Off-Board-Navigation durchgeführt, indem mit Hilfe des Mobiltelefonmoduls 2 eine Navigationszentrale über ein Mobilfunk-Telefonnetz angewählt wird, um auf der Basis von in der Navigationszentrale verfügbarem aktuellen Kartenmaterial sowie ggf. aktuellen Verkehrsinformationen (Staus, Baustellen, Umleitungen etc.) eine Routenberechnung für eine Route von einem Startpunkt zu einem Zielpunkt ggf. über Zwischenziele durchzuführen. Hierzu wird eine Routenberechnungsanfrage an die Navigationszentrale übersandt und die dort berechnete Routenführung mit Hilfe des Mobiltelefonmoduls 2 wieder empfangen. Die Routenberechnungsanfrage wird anschließend auf der Anzeigeeinheit 5 dargestellt. Zusätzlich oder alternativ können auch akustische Routenführungshinweise mit Hilfe der integrierten Freisprechanlage ausgegeben werden

Eine nutzerspezifische Mobiltelefonfunktion des kombinierten Navigations- und Kommunikationsgerätes wird dadurch bereitgestellt, dass über eine Datenübertragungsschnittstelle 18 nutzerspezifische Daten, wie Zugangs-, Systemeinstellungsund Nutzdaten, von einer SIM-Karte 19 eines externen Mobiltelefons 20 an das Mobiltelefonmodul 2 übertragen werden. Die Funktionalität des externen Mobiltelefons 20 wird im Mobiltelefonmodul 2 dadurch bereitgestellt, dass das Mobiltelefonmodul 2 wiederholt bedarfsweise auf die im externen Mobiltelefon 20 abgelegten nuterzspezifischen Daten zugreift, so dass eine ständige Kommunikationsverbindung bestehen muss. Bei Abbruch der Kommunikationsverbindung wird die Kontrolle wieder an das externe Mobiltelefon zurückgegeben. Optional können die nutzerspezifischen Daten aber auch in einem mit dem Mobiltelefonmodul 2 verbundenen Datenspeicher 21 abgelegt werden. Für die Off-Board-Navigation können zusätzliche nuterzspezifische Daten relevante Informationen zur Routenführung sein, beispielsweise Präferenzen von Verkehrswegen, durchschnittliche Fahrtgeschwindigkeiten, regelmäßig angefahrene Punkte etc..

Es wird beispielsweise der rSAP-Standard ausgenutzt, bei dem nach der erfolgten Übertragung der nutzungsspezifischen Daten das externe Mobiltelefon 20 weitestgehend deaktiviert wird und das Mobiltelefonmodul 2 des kombinierten Navigationsund Kommunikationsgerätes 1 die Funktion des die nutzerspezifischen Daten übertragenden externen Mobiltelefons 20 übernimmt. Dann meldet sich das kombinierte Navigations- und Kommunikationsgerät 1 selbsttätig bei mindestens einer Basisstation 7 des Mobilfunknetzes 8 an und erhält im Folgenden an die nutzerspezifische Rufnummer gerichtete Anrufe bzw. kann für die nutzerspezifische Rufnummer Kommunikationsverbindungen aufbauen.

Optional kann in dem kombinierten Navigations- und Kommunikationsgerät 1 eine Datenschnittstelle 22, beispielsweise ein USB-Anschluss integriert sein, um die in dem kombinierten Navigations- und Kommunikationsgerät 1 enthaltene Steuerungssoftware zu aktualisieren, Programm- und Nutzdaten für das Mobiltelefonmodul 2 und/oder die Navigationseinheit 3 von und zu externen Geräten zu übertragen und insbesondere um auf einem externen Gerät, beispielsweise einem USB-Datenspeicher, enthaltene Audiodaten über den mindestens einen internen Lautsprecher 11a oder den Anschluss 10 für die externe Steuerungseinheit 9b für Telefonfreisprechfunktionen ein- oder mehrkanalig (Mono-, Stereo-, Dolby-Surround etc.) wiederzugeben.

Optional kann auch ein SIM-Kartenleser 23 in das Gerät integriert sein, um eine für Mobiltelefone 20 genutzten SIM-Karte, die nutzerspezifische Daten enthält, in den SIM-Kartenleser 23 einzuführen und die in der SIM-Karte enthaltenen Daten zur Nutzung durch das Mobiltelefonmodul 2 zu übertragen. Damit kann durch ein Einstecken einer SIM-Karte die Mobiltelefonfunktion aktiviert werden.

Das Mobiltelefonmodul 2 sollte bevorzugt in an sich bekannter Weise eine Hands-Free-Funktionalität und Head-Set-Funktionalität haben, um die Freisprechfunktion auch in Verbindung mit nicht rSAP-fähigen Mobiltelefonen bereitzustellen. Das Hands-Free-Profil regelt die Kommunikation zwischen Freisprecheinrichtung und Mobiltelefon, um Sprachverbindungen mit dem Mobiltelefon aufzubauen und dieses fernzusteuern. Das Head-Set-Profil regelt die Kommunikation zwischen Mobiltelefon und einem externen Lautsprecher und Mikrofon sowie die ferngesteuerte oder automatische Rufannahme.

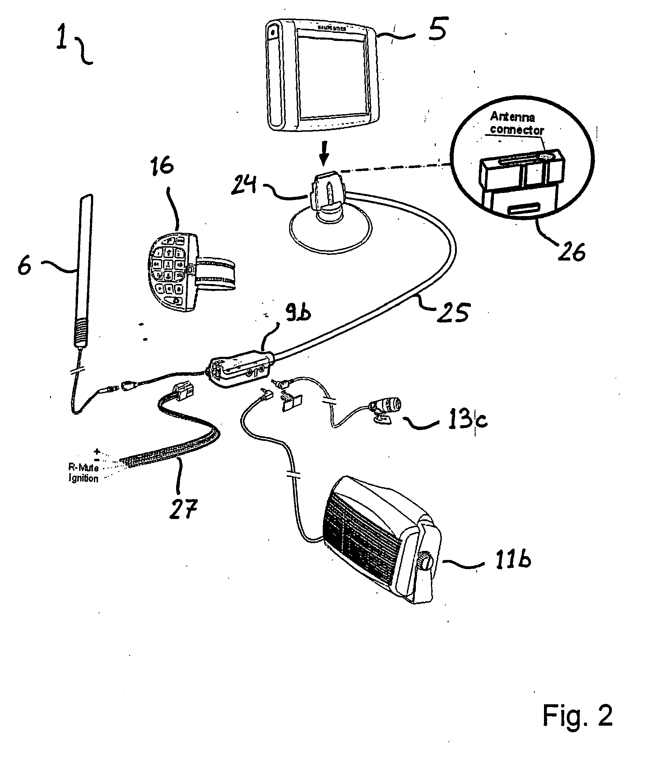

Die Figur 2 lässt eine perspektivische Ansicht der Komponenten des kombinierten Navigations- und Kommunikationsgerätes 1 erkennen, bei dem das in der Figur 1 skizzierte Mobiltelefonmodul 2, die Navigationseinheit 3, die Steuerungseinheit 4 und die Anzeigeeinheit 5 in ein gemeinsames Gehäuse integriert ist. Das Gehäuse ist auf einen Halter 24 aufsteckbar, der mit einem Verbindungskabel 25 mit einer externen Interfaceeinheit 9b für Telefonfreisprechfunktionen verbunden ist. In dem Kopf 26 des Halters 24 befindet sich eine Steckkontaktanordnung einschließlich eines Antennenanschlusses für eine externe Antenne 6.

Die externe Interfaceeinheit 9b ist mit einem steckbaren Verbindungskabel 27 an das Bordnetz (+,-) angeschlossen und hat eine Leitung zur Stummschaltung (R-Mute) und eine Leitung zum Zündschloss (Ignition).

Weiterhin ist ein externer Lautsprecher 11 b mit einem Verbindungskabel und einem Steckkontaktanschluss zur Verbindung mit der externen Interfaceeinheit 9b vorgesehen. Ebenso kann ein externes Mikrofon 13c über ein Verbindungskabel und einen Steckkontaktanschluss an die externe Interfaceeinheit 9b angeschlossen werden.

Die Bedienung des kombinierten Navigations- und Kommunikationsgerätes 1 erfolgt über eine Fernbedienung 16, die beispielsweise mit einem Klemmgurt an das Lenkrad eines Fahrzeuges befestigt werden kann.

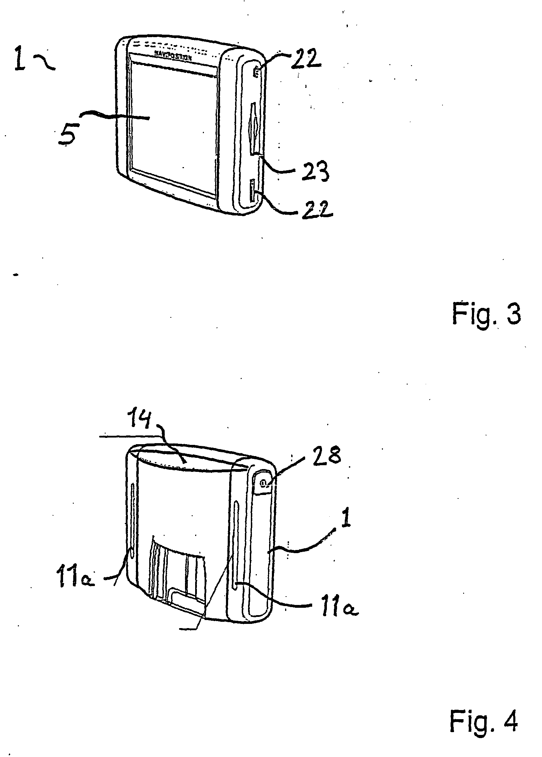

Die Figur 3 lässt eine perspektivische Vorderansicht der Anzeigeeinheit 5 erkennen, bei der an einer Seite ein Mini-USB-Anschluss und ein Standard-USB-Anschluss als Datenschnittstelle 22 vorgesehen ist. Weiterhin ist ein Schlitz zum Einführen einer SIM-Karte in den in die Anzeigeeinheit 5 integrierten SIM-Kartenleser 23 vorgesehen.

Die Figur 4 lässt eine perspektivische Rückansicht der Anzeigeeinheit 5 erkennen. Es wird deutlich, dass neben einem Ein-Aus-Schalter 28 an der Seitenkante zwei Lautsprecher 11a zur Bildung eines Stereo-Lautsprechersystems an der Rückseite vorgesehen sind. An der Oberkante der Rückwand ist zudem ein Satellitenortungs-Empfangsmodul 14 in Form eines GPS-Empfängers in das Gehäuse integriert.

## Patentansprüche

1. Kombiniertes Navigations- und Kommunikationsgerät (1) mit in das Gerät (1) integriertem Mobiltelefonmodul (2) mit Telefon-Freisprechfunktion, mit einer Navigationseinheit (3) zur Routenführung und mit einer von dem Mobiltelefonmodul (2) und der Navigationseinheit (3) gemeinsam angesteuerten Anzeigeeinheit (5), **dadurch gekennzeichnet, dass** das Mobiltelefonmodul (2) zum Empfang von nutzerspezifischen Daten von einem externen Mobiltelefon (20) und anschließender Bereitstellung einer nutzerspezifischen Mobiltelefonfunktion durch das kombinierte Navigations- und Kommunikationsgerät (1) ausgebildet ist.

2. Kombiniertes Navigations- und Kommunikationsgerät (1) nach Anspruch 1, **dadurch gekennzeichnet, dass** das kombinierte Navigations- und Kommunikationsgerät (1) zum Anwählen einer Navigationszentrale über ein Mobilfunk-Telefonnetz mit Hilfe des integrierten Mobiltelefonmoduls (2), Übersenden mindestens einer Routenberechnungsanfrage an die Navigationszentrale, Empfangen mindestens einer berechneten Routenführung von der Navigationszentrale mit Hilfe des integrierten Mobiltelefonmoduls (2) und Anzeigen der Routenführung auf der Anzeigeeinheit (5) ausgebildet ist.

3. Kombiniertes Navigations- und Kommunikationsgerät (1) nach Anspruch 1 oder 2, **dadurch gekennzeichnet, dass** die nutzerspezifischen Daten Zugangs-, Systemeinstellungs- und/oder Nutzdaten sind.

4. Kombiniertes Navigations- und Kommunikationsgerät (1) nach einem der Ansprüche 1 bis 3, **dadurch gekennzeichnet, dass** das Mobiltelefonmodul (2) einen Datenspeicher (21) für nutzerspezifische Daten hat.

5. Kombiniertes Navigations- und Kommunikationsgerät (1) nach Anspruch 4, **dadurch gekennzeichnet, dass** in dem Datenspeicher (21) eine Präferenzliste von externen Mobiltelefonen (20) abgelegt ist, um den Empfang der nutzerspezifischen Daten in Abhängigkeit von der Präferenzliste zu steuern.

6. Kombiniertes Navigations- und Kommunikationsgerät (1) nach Anspruch 5, **dadurch gekennzeichnet, dass** der Empfang der nutzerspezifischen Daten automatisch dann erfolgt, wenn ein in der Präferenzliste enthaltenes externes Mobiltelefon (20) in die Übertragungsreichweite des kombinierten Navigationsund Kommunikationsgerätes (1) gelangt.

7. Kombiniertes Navigations- und Kommunikationsgerät (1) nach einem der vorhergehenden Ansprüche, **dadurch gekennzeichnet, dass** das kombinierte Navigations- und Kommunikationsgerät (1) eine optische Datenübertragungsschnittstelle (18), insbesondere eine Infrarotschnittstelle, zum Empfang der nutzerspezifischen Daten hat.

8. Kombiniertes Navigations- und Kommunikationsgerät (1) nach einem der vorhergehenden Ansprüche, **dadurch gekennzeichnet, dass** das kombinierte Navigations- und Kommunikationsgerät (1) eine von einer Sende-/Empfangseinheit des Mobiltelefonmoduls (2) zur Telefonkommunikation über das Mobiltelefonnetz separate Funkdatenübertragungsschnittstelle (18), insbesondere eine Bluetooth-Schnittstelle, zum Empfang der nutzerspezifischen Daten hat.

9. Kombiniertes Navigations- und Kommunikationsgerät (1) nach einem der vorhergehenden Ansprüche, **gekennzeichnet durch** mindestens einen in ein gemeinsames Gehäuse des Gerätes integrierten und mit dem Mobiltelefonmodul (2) und der Navigationseinheit (3) direkt oder indirekt verbundenen Lautsprecher.

10. Kombiniertes Navigations- und Kommunikationsgerät (1) nach einem der vorhergehenden Ansprüche, **dadurch gekennzeichnet, dass** eine Steuerungseinheit (4) für Telefonfreisprechfunktionen in das Gerät (1) integriert und mit wenigstens dem Mobiltelefonmodul (2) verbunden ist.

11. Kombiniertes Navigations- und Kommunikationsgerät (1) nach einem der vorhergehenden Ansprüche, **dadurch gekennzeichnet, dass** das Gerät (1) ein mit dem Navigationsmodul (3) verbundenes und in das Gerät (1) integriertes Satellitenortungs-Empfangsmodul zur satellitengestützten Positionsbestimmung und/oder Rundfunkempfänger mit Verkehrsdatenextraktionseinheit zur Extraktion von Verkehrsdaten aus Rundfunksignalen hat.

12. Kombiniertes Navigations- und Kommunikationsgerät (1) nach einem der vorhergehenden Ansprüche, **dadurch gekennzeichnet, dass** in das Gerät (1) eine Datenschnittstelle (22), insbesondere ein USB-Anschluss, integriert und mit den Lautsprechern und/oder einem Freisprechanlagenanschluss zur ein- oder mehrkanaligen Audiowiedergabe von über die Datenschnittstelle (22) in das Gerät (1) einlesbaren Audiodaten verbunden ist.

13. Kombiniertes Navigations- und Kommunikationsgerät (1) nach einem der vorhergehenden Ansprüche, **dadurch gekennzeichnet, dass** in das Gerät (1) ein SIM-Kartenleser (23) integriert und mit dem Mobiltelefonmodul (2) zum Auslesen der nutzerspezifischen Daten von einem in einer SIM-Karte integrierten Datenspeicher verbunden ist.

14. Kombiniertes Navigations- und Kommunikationsgerät (1) nach einem der vorhergehenden Ansprüche, **gekennzeichnet durch** einen Anschluss für ein externes Positionsortungsmodul.

15. Kombiniertes Navigations- und Kommunikationsgerät (1) nach Anspruch 14, **dadurch gekennzeichnet, dass** das Positionsortungsmodul ein Satellitenortungs-Empfangsmodul (14) ist.

16. Kombiniertes Navigations- und Kommunikationsgerät (1) nach einem der vorhergehenden Ansprüche, **dadurch gekennzeichnet, dass** das kombinierte Navigations- und Kommunikationsgerät (1) eine Notruftaste hat und zum automatischen Anwählen einer Notrufzentrale über das integrierte Mobiltelefonmodul (2) und Übersenden von Positionsdaten an die Navigationszentrale bei Betätigung der Notruftaste eingerichtet ist.
